# EUROPÄISCHE PATENTSCHRIFT

(11) **EP 0 662 056 B1**
(45) Veröffentlichungstag und Bekanntmachung des Hinweises auf die Patenterteilung: **05.03.1997**
(21) Anmeldenummer: 93920786.6
(22) Anmeldetag: 21.09.1993
(51) Int. Cl.: B60S 3/04, B08B 3/02

(54) **FAHRZEUG-WASCHVORRICHTUNG**
VEHICLE-WASHING INSTALLATION
APPAREIL POUR LE LAVAGE DE VEHICULES

(30) Priorität: 26.09.1992 DE 4232297
(43) Veröffentlichungstag der Anmeldung: 12.07.1995
(73) Patentinhaber: CLEAN PARK GmbH, D-71364 Winnenden (DE)
(72) Erfinder: HIRZEL, Walter, D-71522 Backnang (DE)
(74) Vertreter: Hoeger, Stellrecht & Partner
(86) Internationale Anmeldenummer: EP9302553
(87) Internationale Veröffentlichungsnummer: WO9407714

(56) Entgegenhaltungen:
- DE-A- 2 820 527
- DE-A- 4 132 450
- US-A- 3 951 682
- US-A- 4 512 814
- US-A- 4 983 221

## Beschreibung

Die Erfindung betrifft eine Fahrzeug-Waschvorrichtung mit mindestens einer handgeführten Abgabeeinrichtung zum Aufbringen einer der Abgabeeinrichtung über einen flexiblen Schlauch zugeführten Flüssigkeit auf eine zu bearbeitende Fläche und mit einem Gehäuse zur Aufnahme der Abgabeeinrichtung nach deren Gebrauch. Ein derartiges Fahrzeug-Waschvorrichtung ist in der US-A-4 512 814 bzw. in der DE-A-2 820 527 dargestellt.

Zum Waschen von Fahrzeugen, beispielsweise Kraftfahrzeugen, werden häufig handgeführte Spritzpistolen, Bürsten, etc. verwendet, denen über einen flexiblen Schlauch eine Reinigungsflüssigkeit zugeführt wird, beispielsweise reines Wasser oder mit Chemikalien versetztes Wasser. Dieses wird teilweise unter hohem Druck angeliefert und löst dadurch Schmutzteile am Kraftfahrzeug sehr effektiv.

Bei der Reinigung läßt es sich nicht vermeiden, daß die zur Reinigung des Fahrzeuges verwendeten Abgabeeinrichtungen, also insbesondere Bürsten oder dergleichen, selbst stark verschmutzt werden. An Selbstbedienungs-Waschanlagen, an denen derartige Abgabeeinrichtungen verwendet werden, ist dies außerordentlich störend, da dann der nachfolgende Benutzer gezwungen ist, mit verschmutzten Abgabeeinrichtungen zu arbeiten.

Es ist Aufgabe der Erfindung, eine gattungsgemäße Fahrzeug-Waschvorrichtung so auszustatten, daß sichergestellt wird, daß ein Benutzer mit sauberen Abgabeeinrichtungen arbeiten kann.

Diese Aufgabe wird bei einer Fahrzeug-Waschvorrichtung der eingangs beschriebenen Art erfindungsgemäß dadurch gelöst, daß im Gehäuse eine Waschvorrichtung angeordnet ist, die Waschflüssigkeit auf die im Gehäuse angeordnete Abgabeeinrichtung richtet und diese dadurch reinigt.

Die Abgabeeinrichtungen werden nach der Benutzung üblicherweise in das Gehäuse eingeschoben und in diesem aufbewahrt, bis der nächste Benutzer die Abgabeeinrichtung wieder verwendet. Durch die Anordnung einer Waschvorrichtung im Inneren des Gehäuses wird es möglich, diese Abgabeeinrichtungen vor der nächsten Benutzung ihrerseits zu reinigen, so daß sichergestellt ist, daß bei erneuter Entnahme der Abgabeeinrichtung aus dem Gehäuse die Abgabeeinrichtung sauber ist.

Dabei ist es günstig, wenn das Gehäuse eine verschließbare Einstecköffnung für jede Abgabeeinrichtung aufweist, so können beispielsweise in dem Gehäuse drei derartige Abgabeeinrichtungen nebeneinander eingesteckt werden, beispielsweise eine Hochdruck-Sprühlanze, eine Felgen-Sprühlanze und eine Waschbürste, die jeweils über einen eigenen Schlauch mit der notwendigen Flüssigkeit versorgt werden.

Besonders günstig ist es, wenn die Einstecköffnung durch flexible Lappen verschlossen ist, da diese das Ein- und Ausschieben der Abgabeeinrichtung in keiner Weise behindern und trotzdem sicherstellen, daß die Einstecköffnungen sowohl bei eingeschobener Abgabeeinrichtung als auch ohne eingeschobene Abgabeeinrichtung verschlossen sind.

Die Waschvorrichtung kann eine im Gehäuse angeordnete Sprühdüse umfassen, vorzugsweise ist die Waschvorrichtung am Boden des Gehäuses angeordnet.

Besonders vorteilhaft ist es, wenn eine Steuerung zum Ein- und Ausschalten der Waschvorrichtung vorgesehen ist. Diese Steuerung kann durch Handbetätigung aktiviert werden.

Vorteilhaft ist es, wenn die Steuerung ein Zeitglied umfaßt, das die Waschvorrichtung zu einem vorbestimmten Zeitraum nach dem Einschalten ausschaltet.

Es kann auch vorgesehen sein, daß die Steuerung die Waschvorrichtung nach festen Zeitintervallen wiederholt einschaltet.

Besonders vorteilhaft ist es, wenn die Steuerung die Waschvorrichtung nach Beendigung einer von ihr ebenfalls gesteuerten Betätigung der Abgabeeinrichtung einschaltet. Beispielsweise in Selbstbedienungs-Waschanlagen finden Steuerungen Anwendung, die nacheinander die Zufuhr bestimmter Flüssigkeiten zu den verschiedenen Abgabeeinrichtungen steuern und diese beispielsweise nach einem bestimmten Zeitraum abschalten. Diese Steuerung kann verwendet werden, um zusätzlich nach dem Ende der Betätigung einer Abgabeeinrichtung den Waschvorgang im Gehäuse zu beginnen.

Es wäre auch möglich, einen Sensor vorzusehen, der beim Einführen einer Abgabeeinrichtung in das Gehäuse ein Signal an die Steuerung liefert, die daraufhin die Waschvorrichtung einschaltet. Ein solcher Sensor kann beispielsweise ein Fühler oder eine Lichtschranke sein, die auf das Einschieben der Abgabeeinrichtung ansprechen.

Bei einer besonders bevorzugten Ausführungsform ist vorgesehen, daß das Gehäuse beheizt ist. Dadurch kann auch bei Gefriertemperaturen im Innern des Gehäuses die gewünschte Reinigung der Abgabeeinrichtungen vorgenommen werden, ohne daß die dabei verwendete Flüssigkeit einfriert.

Beispielsweise kann das Gehäuse durch eine Fußbodenheizung beheizt werden, die in Waschanlagen dieser Art häufig ohnehin vorhanden ist. Zu diesem Zweck kann in das Gehäuse in den Fußboden eine Edelstahlplatte eingelegt werden, die die von der Fußbodenheizung herbeigeführte Wärme gleichmäßig in das Gehäuse verteilt.

Weiterhin ist es vorteilhaft, wenn die zu den Abgabeeinrichtungen führenden Schläuche beheizt sind, so daß auch im Bereich der Schläuche bei tiefen Außentemperaturen keine Gefahr des Einfrierens besteht.

Dabei ist es besonders vorteilhaft, wenn die Abgabeeinrichtungen mindestens so weit in das Gehäuse einschiebbar sind, wie sie unbeheizt sind. Die außerhalb des Gehäuses angeordneten Teile werden dann durch die Schlauchbeheizung vor dem Einfrieren bewahrt, die übrigen Teile durch die Beheizung des Gehäuses selber, so daß die gesamten Abgabeeinrichtungen über ihre gesamte Länge entweder eigenbeheizt oder durch das Gehäuse fremdbeheizt sind.

Günstig ist es, wenn die Steuerung durch Betätigungselemente einstellbar ist, die sich in unmittelbarer räumlicher Nähe zu dem Gehäuse befinden. Normalerweise werden die verschiedenen gewünschten Waschvorgänge programmiert, beispielsweise durch Einschieben von Code-Karten oder durch Betätigung verschiedener Schalter oder Tasten. Es ist günstig, wenn sich diese Betätigungselemente in der Nähe des Gehäuses befinden, so daß unmittelbar nach Betätigung der Steuerung die dort eingesteckten Abgabeeinrichtungen entnommen und zur Reinigung des Fahrzeuges verwendet werden. Es ist dabei auch günstig, daß dadurch ein Anreiz geschaffen wird, die Abgabeeinrichtungen nach der Verwendung wieder in das Gehäuse einzuschieben, beispielsweise dadurch, daß nach Beendigung eines Reinigungsvorganges an den Betätigungselementen der Steuerung erneut Schaltvorgänge vorgenommen werden müssen. Damit ist sichergestellt, daß die Abgabeeinrichtungen nach der Verwendung in Inneren des Gehäuses gewaschen und gegebenenfalls beheizt werden.

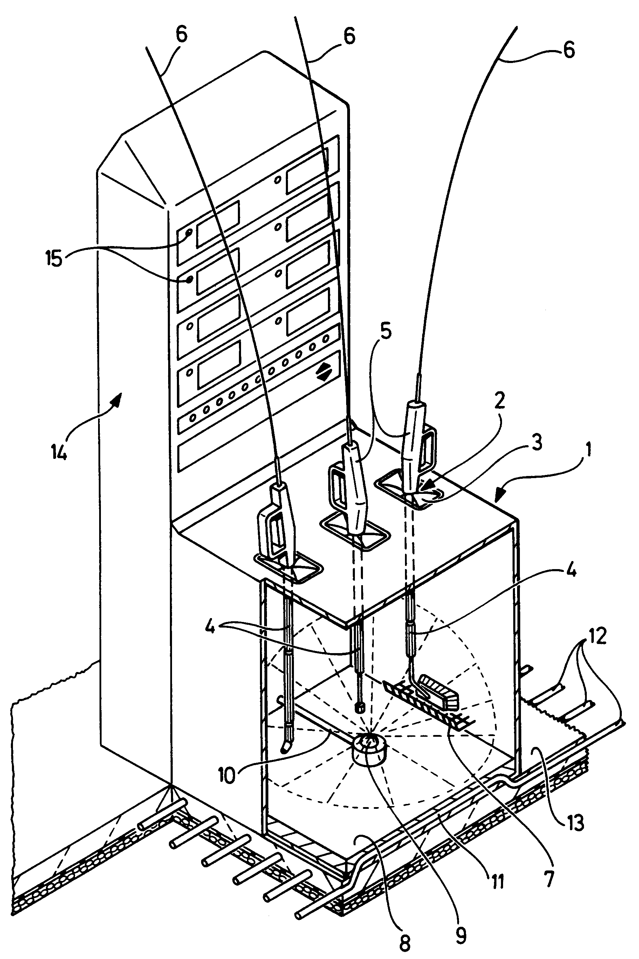

Die nachfolgende Beschreibung einer bevorzugten Ausführungsform der Erfindung dient im Zusammenhang mit der Zeichnung der näheren Erläuterung. Die Zeichnung zeigt verschiedene Abgabeeinrichtungen einer Fahrzeugwaschanlage in einem aufgebrochen dargestellten Gehäuse mit Wascheinrichtung.

In einem kastenförmigen Gehäuse 1 sind an der Oberseite nebeneinander drei Einstecköffnungen 2 angeordnet, die jeweils durch mehrere flexible Lappen 3 verschlossen sind. Die Lappen können beispielsweise aus Gummi bestehen. Durch diese Einstecköffnungen 2 sind sprühlanzenförmige Abgabeeinrichtungen 4 in das Innere des Gehäuses eingesteckt, beispielsweise eine Hochdruck-Sprühlanze, eine Felgen-Sprühlanze und eine Waschbürste. Die Griffteile 5 der Abgabeeinrichtungen 4 befinden sich dabei außerhalb des Gehäuses 1, die sprühlanzenförmigen Teile dagegen im Inneren. Ebenfalls außerhalb des Gehäuses sind flexible Schläuche 6 angeordnet, die zu den einzelnen Abgabeeinrichtungen 4 führen und diese mit einer Flüssigkeit versorgen, beispielsweise mit reinem Wasser oder mit chemikalienversetztem Wasser.

Die Abgabeeinrichtungen 4 können im Inneren des Gehäuses durch geeignete Halterungen festgelegt sein, im dargestellten Ausführungsbeispiel ist lediglich bei einer Waschbürste ein gitterförmiger Halter 7 dargestellt.

Am Boden 8 des Gehäuses 1 ist eine zentrale Sprühdüse 9 angeordnet, die über eine Leitung 10 mit einer Waschflüssigkeit versorgt wird und diese in den Innenraum des Gehäuses 1 sprüht oder schwallt, so daß die in das Gehäuse 1 eingesteckten Abgabeeinrichtungen 4 von der Flüssigkeit getroffen und gereinigt werden.

Der Boden 8 des Gehäuses 1 ist im dargestellten Ausführungsbeispiel in Form einer dicken Edelstahlplatte ausgebildet, durch die Leitungen 11 einer Fußbodenheizung 12 hindurchgeführt sind. Diese Fußbodenheizung 12 beheizt auch den Boden 13 in dem das Gehäuse 1 umgebenden Bereich der Waschanlage. Durch diese Leitungen 11 und den dicken Boden 8 wird der Innenraum des Gehäuses 1 soweit beheizt, daß auch bei niedrigen Außentemperaturen die Temperaturen im Innenraum des Gehäuses 1 nicht unter den Gefrierpunkt sinken.

An der Rückseite des Gehäuses 1 ist in einer Konsole 14 eine Steuerung angeordnet, die über diverse Betätigungselemente 15 programmiert und aktiviert werden kann. Diese Steuerung steuert zunächst die Zufuhr von Flüssigkeit zu den einzelnen Abgabeeinrichtungen 4, so daß der Benutzer sich ein Waschprogramm zusammenstellen kann. Zusätzlich betätigt diese Steuerung auch ein in der Zeichnung nicht dargestelltes Schließventil in der Leitung 10, so daß durch diese Steuerung die Düse 9 wahlweise mit Waschflüssigkeit versorgt wird oder nicht.

Beispielsweise kann die Steuerung die Düse 9 jeweils nach einem bestimmten Zeitintervall wiederholt mit Waschflüssigkeit versorgen, so daß nach einem bestimmten Zeitraum alle Abgabeeinrichtungen 4 gewaschen werden, die sich zu diesem Zeitpunkt im Gehäuse 1 befinden. Der Waschvorgang kann dabei über einen bestimmten Zeitraum ablaufen und automatisch beendet werden.

Bei anderen Ausführungsbeispielen wird der Waschvorgang manuell ausgelöst, dazu kann ein Betätigungselement 15 an der Konsole 14 vorgesehen sein.

Es ist auch möglich, daß im Zusammenhang mit der Steuerung der Flüssigkeitszufuhr zu den Abgabeeinrichtungen auch eine Flüssigkeitszufuhr zur Düse 9 korreliert wird, beispielsweise in der Weise, daß nach Beendigung der Flüssigkeitszufuhr zu allen Abgabeeinrichtungen 4 automatisch die Düse 9 mit Flüssigkeit versorgt wird, da dann die Reinigung des Fahrzeuges abgeschlossen ist und die Abgabeeinrichtungen 4 alle wieder in die Einstecköffnungen 2 eingesteckt sind.

In dem Gehäuse 1 können in der Zeichnung nicht dargestellte Sensoren angeordnet sein, die das Vorhandensein der Abgabeeinrichtung 4 feststellen und den Waschvorgang der Düse 9 auslösen, sobald eine Abgabeeinrichtung 4 in die ihr zugeordnete Einstecköffnung 2 eingeschoben wird.

Wesentlich ist lediglich, daß bei Beginn eines neuen Waschvorganges die im Gehäuse angeordneten Abgabeeinrichtungen 4 gereinigt sind, so daß der nächste Benutzer auf jeden Fall mit gereinigten Abgabeeinrichtungen arbeiten kann.

## Patentansprüche

1. Fahrzeug-Waschvorrichtung mit mindestens einer handgeführten Abgabeeinrichtung (4, 5) zum Aufbringen einer der Abgabeeinrichtung über einen flexiblen Schlauch (6) zugeführten Flüssigkeit auf eine zu bearbeitende Fläche und mit einem Gehäuse (1) zur Aufnahme der Abgabeeinrichtung (4, 5) nach deren Gebrauch,
**dadurch gekennzeichnet**, daß im Gehäuse (1) eine Waschvorrichtung (9) angeordnet ist, die Waschflüssigkeit auf die im Gehäuse (1) angeordnete Abgabeeinrichtung (4) richtet und diese dadurch reinigt.

2. Vorrichtung nach Anspruch 1, dadurch gekennzeichnet, daß das Gehäuse (1) eine verschließbare Einstecköffnung (2) für jede Abgabeeinrichtung (4) aufweist.

3. Vorrichtung nach Anspruch 2, dadurch gekennzeichnet, daß die Einstecköffnung (2) durch flexible Lappen (3) verschlossen ist.

4. Vorrichtung nach einem der voranstehenden Ansprüche, dadurch gekennzeichnet, daß die Waschvorrichtung (9) mindestens eine im Gehäuse (1) angeordnete Sprühdüse umfaßt.

5. Vorrichtung nach einem der voranstehenden Ansprüche, dadurch gekennzeichnet, daß die Waschvorrichtung (9) am Boden (8) des Gehäuses (1) angeordnet ist.

6. Vorrichtung nach einem der voranstehenden Ansprüche, dadurch gekennzeichnet, daß eine Steuerung zum Ein- und Ausschalten der Waschvorrichtung (9) vorgesehen ist.

7. Vorrichtung nach Anspruch 6, dadurch gekennzeichnet, daß die Steuerung ein Zeitglied umfaßt, das die Waschvorrichtung (9) zu einem vorbestimmten Zeitraum nach dem Einschalten ausschaltet.

8. Vorrichtung nach Anspruch 6 oder 7, dadurch gekennzeichnet, daß die Steuerung die Waschvorrichtung (9) nach festen Zeitintervallen wiederholt einschaltet.

9. Vorrichtung nach Anspruch 6 oder 7, dadurch gekennzeichnet, daß die Steuerung die Waschvorrichtung (9) nach Beendigung einer von ihr ebenfalls gesteuerten Betätigung der Abgabeeinrichtung (4) einschaltet.

10. Vorrichtung nach Anspruch 6 oder 7, dadurch gekennzeichnet, daß ein Sensor vorgesehen ist, der beim Einführen einer Abgabeeinrichtung (4) in das Gehäuse (1) ein Signal an die Steuerung liefert, die daraufhin die Waschvorrichtung (9) einschaltet.

11. Vorrichtung nach einem der voranstehenden Ansprüche, dadurch gekennzeichnet, daß das Gehäuse (1) beheizt ist.

12. Vorrichtung nach Anspruch 11, dadurch gekennzeichnet, daß das Gehäuse (1) durch eine Fußbodenheizung (12) beheizt ist.

13. Vorrichtung nach Anspruch 11 oder 12, dadurch gekennzeichnet, daß die zu den Abgabeeinrichtungen (4) führenden Schläuche (6) beheizt sind.

14. Vorrichtung nach Anspruch 13, dadurch gekennzeichnet, daß die Abgabeeinrichtungen (4) mindestens so weit in das Gehäuse (1) einschiebbar sind, wie sie unbeheizt sind.

15. Vorrichtung nach einem der Ansprüche 6 bis 14, dadurch gekennzeichnet, daß die Steuerung durch Betätigungselemente (15) einstellbar ist, die sich in unmittelbarer räumlicher Nähe zu dem Gehäuse (1) befinden.

## Claims

1. A vehicle washing installation comprising at least one hand-held dispenser (4, 5) for applying to a surface to be treated a fluid supplied to the dispenser via a flexible tube (6), and a housing (1) for holding the dispenser (4, 5) after use, characterised in that a washing device (9) is arranged in the housing (1) and directs washing fluid onto the dispenser (4) arranged in the housing (1), thereby cleaning the dispenser (4).

2. An installation according to claim 1 characterised in that the housing (1) has a closeable insertion opening (2) for each dispenser (4).

3. An installation according to claim 2, characterised in that the insertion opening (2) is closed by flexible flaps (3).

4. An installation according to any one of the preceding claims, characterised in that the washing device (9) comprises at least one spray nozzle arranged in the housing (1).

5. An installation according to any one of the preceding claims, characterised in that the washing device (9) is arranged on the floor (8) of the housing (1).

6. An installation according to any one of the preceding claims, characterised in that a control system is provided for switching the washing device (9) on and off.

7. An installation according to claim 6, characterised in that the control system comprises a timing element which switches the washing device (9) off a predetermined time after being switched on.

8. An installation according to claim 6 or 7, characterised in that the control system repeatedly switches the washing device (9) on according to fixed time intervals.

9. An installation according to claim 6 or 7, characterised in that the control system switches the washing device (9) on following termination of operation of the dispenser (4) which is also controlled by the control system.

10. An installation according to claim 6 or 7, characterised in that a sensor is provided which delivers a signal to the control system when a dispenser (4) is introduced into the housing (1) and the control system then switches the washing device (9) on.

11. An installation according to any one of the preceding claims, characterised in that the housing (1) is heated.

12. An installation according to claim 11, characterised in that the housing (1) is heated by a floor heating system (12).

13. An installation according to claim 11 or 12, characterised in that the tubes (6) leading to the dispensers (4) are heated.

14. An installation according to claim 13, characterised in that the dispensers (4) are introducible into the housing (1) at least to the extent that they are unheated.

15. An installation according to any one of claims 6 to 14, characterised in that the control system is controllable by operating members (15) provided in the immediate vicinity of the housing (1).

## Revendications

1. Appareil pour le lavage de véhicules, comportant au moins un dispositif de distribution (4, 5), conduit à la main, pour appliquer un liquide, amené au dispositif de distribution par un tuyau flexible (6), sur une surface à traiter, ainsi qu'une carrosserie (1) pour recevoir le dispositif de distribution (4, 5) après son emploi,
caractérisé par le fait que, dans la carrosserie (1), est disposé un dispositif de lavage (9) qui dirige le liquide de lavage sur le dispositif de distribution (4) disposé dans la carrosserie (1) et le nettoie de ce fait.

2. Appareil selon la revendication 1, caractérisé par le fait que la carrosserie (1) présente, pour chaque dispositif de distribution (4), une ouverture d'enfichage (2) obturable.

3. Appareil selon la revendication 2 caractérisé par le fait que l'ouverture d'enfichage (2) est obturée par des languettes flexibles (3).

4. Appareil selon l'une des revendications précédentes, caractérisé par le fait que le dispositif de lavage (9) comporte au moins une buse de pulvérisation disposée dans la carrosserie (1).

5. Appareil selon l'une des revendications précédentes, caractérisé par le fait que le dispositif de lavage (9) est disposé sur le plancher (8) de la carrosserie (1).

6. Appareil selon l'une des revendications précédentes, caractérisé par le fait qu'un organe de commande est prévu pour mettre en circuit et hors circuit le dispositif de lavage (9).

7. Appareil selon la revendication 6, caractérisé par le fait que l'organe de commande comporte un élément temporisé qui met hors circuit le dispositif de lavage (9) pour un intervalle de temps déterminé après mise en circuit.

8. Appareil selon la revendication 6 ou 7, caractérisé par le fait que l'organe de commande met en circuit de façon répétitive le dispositif de lavage (9) à intervalles de temps fixes.

9. Appareil selon la revendication 6 ou 7, caractérisé par le fait que l'organe de commande met en circuit le dispositif de lavage (9) après achèvement d'une manoeuvre du dispositif de distribution (4) également commandée par cet organe.

10. Appareil selon la revendication 6 ou 7, caractérisé par le fait qu'est prévu un détecteur qui, lors de l'introduction d'un dispositif de distribution (4) dans la carrosserie (1), envoie un signal dans l'organe de commande qui, sur ce, met en circuit le dispositif de lavage (9).

11. Appareil selon l'une des revendications précédentes, caractérisé par le fait que la carrosserie (1) est chauffée.

12. Appareil selon la revendication 11, caractérisé par le fait que la carrosserie (1) est chauffée par un chauffage par le plancher (12).

13. Appareil selon la revendication 11 ou 12, caractérisé par le fait que les tuyaux (6) conduisant aux dispositifs de distribution (4) sont chauffés.

14. Appareil selon la revendication 13, caractérisé par le fait que les dispositifs de distribution (4) peuvent s'enfiler dans la carrosserie (1) au moins jusque là où ils ne sont pas chauffés.

15. Appareil selon l'une des revendications 6 à 14, caractérisé par le fait que l'organe de commande est réglable au moyen d'éléments de manoeuvre (15) qui se trouvent au voisinage immédiat de la carrosserie (1).
